# EUROPEAN PATENT APPLICATION

(11) **EP 1 371 943 A1**
(43) Date of publication of application: **17.12.2003**
(21) Application number: 02752883.5
(22) Date of filing: 18.03.2002
(51) Int. Cl.: G01B 11/24

(54) **METHOD FOR NONCONTACT INSPECTION OF DIMENSIONS OF THREE-DIMENSIONAL OBJECTS**

(30) Priority: 19.03.2001 RU 2001107052
(71) Applicant: A4 Vision S.A., Geneva, 1207 (CH)
(72) Inventor: ZELYAEV, Yury Irfatovich, Moscow, 105043 (RU); KLIMOV, Andrei Vladimirovich, Moscow, 115407 (RU); YUKHIN, Artem Leonidovich, Moscow, 109004 (RU)
(86) International application number: RU0200099
(87) International publication number: WO02075244

(57) **Abstract**

The invention relates to measuring engineering and can be used for visualising the profiles of three-dimensional objects. The inventive method is based on a structured bias lighting principle and consists in repetitively forming a sounding structured bias lighting on the surface of a controlled object by lighting the surface of a controlled object with an optical radiation beam spatially modulated in relation to intensity, recording the image of the structure of the sounding structured bias lighting distorted by the relief of the by adding said images, and determining, with the aid of an electronic digital calculator, the height of the relief of the surface of the controlled object according to the degree of distortion of the image of the structure of the sounding bias lighting and determining two other co-ordinates according to the position of the distorted structure of the bias lighting on the recorded image. The intensity modulation is controlled according to one co-ordinate, thereby forming the structured bias lighting in the form, for example of a system of bands on the surface of the controlled object.

## Description

### Technical Field

The prospective invention relates to the measuring engineering and can be used for visualization of profiles of three-dimensional objects.

### Background Art

The methods and the devices realizing a principle of " the structured illuminating " used in three-dimensional computer animation and some other applications for registration of a surface shape are known. The method consists that separate contours of a surface are consistently scanned using a luminous strip and the controllable sizes are judged by a degree of distortion of a strip image and a strip position in the Cartesian system of coordinates (see, for example, Technical vision of robots. - by ed. A.Pew.; translated from eng. - M.:Mashinostroenie, 1987 p.56-57).

Disadvantages of known method and devices realizing it are low accuracy and prolonged time of the control, associated with the availability of operation and the unit of scanning.

It is known the method and device realizing it to control of the linear sizes of three-dimensional objects on three Cartesian coordinates. The method consists that the system of multi-colored strips produced by spatial modulation along one coordinate of intensity of probing optical radiation is projected on an object. The system of multi-colored strips has periodic properties and produces the structured illuminating. As a consequence all part of a controllable object surface getting in sight by photo-collecting device and the distorted image of the structured illuminating "imposed" on a surface are registered in one frame completely. The controllable sizes are judged by degrees of image distortions of strips set and strips position in the Cartesian system of coordinates (see, for example, WO 00/ 70303).

Disadvantage of known method and devices realizing it is low accuracy, associated with impossibility to interpret unequivocally breaks in an image of the strips distorted either by relief of a controllable object surface, or by through holes, or by low value of the reflection spectral factor dependent on color of any part of a controllable object surface. If the controllable object represents itself a set of local components, for example a set of turbine vanes, restoration of topology of such object and the subsequent control of the linear sizes is impossible using this method.

The chosen as the prototype method of the linear sizes control of three-dimensional objects on three Cartesian coordinates using forming of separate projections of object of the tomogram restoration and the subsequent processing of the obtained tomogram by COMPUTER is the most related of known methods in technical essence and achievable result. The known method of the contactless control of the linear sizes of the three-dimensional objects consists in repeated illumination of a controllable object surface by a beam of optical radiation under different foreshortenings, registration of flat images of the illuminated parts of a surface at each illumination foreshortening variation, topology restoration of a controllable object surface using reverse images projecting of the illuminated parts of a surface and summation of reverse projections with regard to turn of each projection to the angle appropriate to each illumination foreshortening (see, G.G.Levin, G.N.Vishnjakov Optical tomography. - M.: Radio and communication, 1989.-224p.: ill., p.10-12).

Disadvantages of known method are the high error of the control and the limited functionalities. The high error of measurement is caused by the fact that at a directing an optical radiation beam uniformly dispersed by section on a controllable object surface, the picture distortions caused by shallow local hollows and convexities, which sizes are less than a beam section, are not registered, and they cannot be identified without the aprioristic information on a surface microstructure of a controllable surface.

### Disclosure of Invention

The essence of the claimed invention is expressed in aggregate essential attributes sufficient for achievement by the prospective invention of technical result, which is expressed in the accuracy increase of the linear sizes control of three-dimensional objects and possibilities widening at control performing.

The claimed set of essential attributes is in a direct relationship of cause and effect with the achievable result, because the effect is obtained due to using of a proposed sequence of operations, each of which is interconnected to the others.

The claimed method of the contactless control of the linear sizes of the three-dimensional objects consists in repeated illumination of a controllable object surface by a beam of optical radiation under different foreshortenings, registration of flat images of the illuminated parts of a surface at each illumination foreshortening variation, topology restoration of a controllable object surface using reverse images projecting of the illuminated parts of a surface and summation of reverse projections with regard to turn of each projection to the angle appropriate to each illumination foreshortening.

Novelty of claimed method is seen in that illumination of a controllable object surface is carried out by probing structured illuminating, operating a spatial modulation of an optical radiation beam, registration of flat images of the illuminated parts of a surface is carried out on a direction distinct from normal, also the controllable sizes are judged with regard to restored topology together with determination of a relief height of a controllable object surface by a degree of image distortion of the probing illuminating structure, two other coordinates-by a distortions position of illuminating structure on restored topology of a controllable object surface.

Comparison of the claimed technical decision with the prototype has enabled to establish its consistency to criterion "novelty" as it is not known from an engineering level.

The proposed method is industrially applicable by current means and conforms to criterion "the invention level", as it does not obviously follow from an engineering level, thus from the last one it is not revealed any transformations characterized by distinctive essential attributes from the prototype, directed on achievement of the specified technical result.

Thus, the proposed technical decision conforms to established conditions of patentability of the invention.

The applicant has not revealed other technical decisions of similar purpose with similar essential attributes.

### Brief Description of Drawings

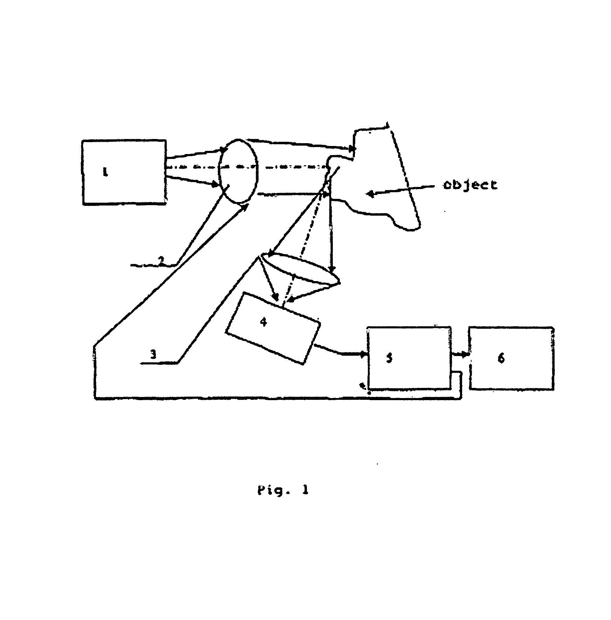

The diagram of the device realizing proposed method is shown on Fig. 1. The device contains the source 1 of optical radiation, the modulator 2, the objective 3, the photoregistrar 4, installed in the plane of the objective 3 image, the digital electronic unit 5, the unit of indication of a registered image 6. The input of the digital electronic unit 5 is connected to the output of the photoregistrar 4, and the output is connected to the controlling input of the modulator 2.

Fig.2 shows the registration diagram of flat projections of object images at three positions of a source of illumination and the recording part of device.

On Fig.3 the diagram of restoration of the tomogram on flat projections of images of the object, obtained is shown at three positions of a source of illumination and recording part of device.

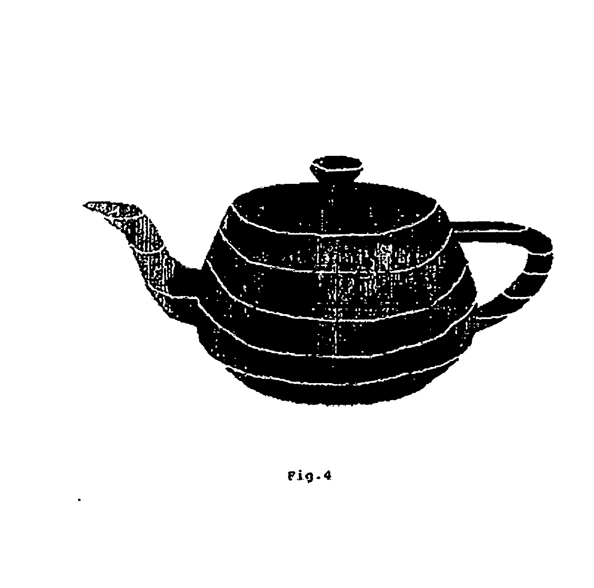

Fig.4 shows the example of an image of one of projections of a controllable object image with the registered image of a probing illuminating structure, distorted by a surface relief of controllable object, as a system of strips. The value Δ*Y* is proportional to height of a relief relative to a surface topology.

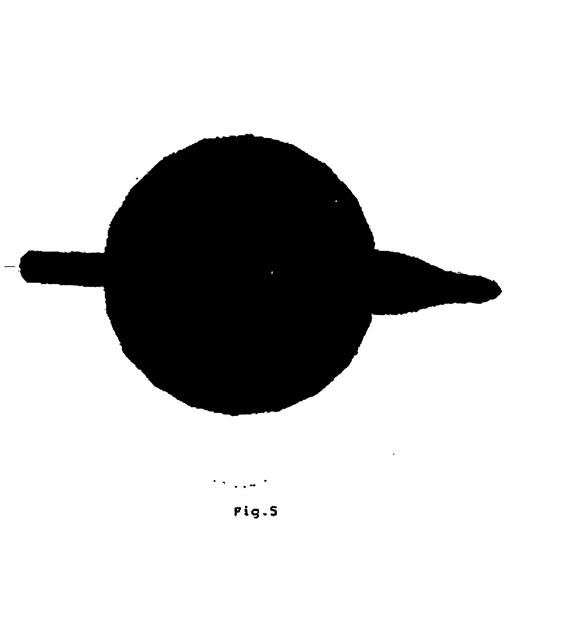

The example of an image of the second of projections of a controllable object image is shown on Fig.5.

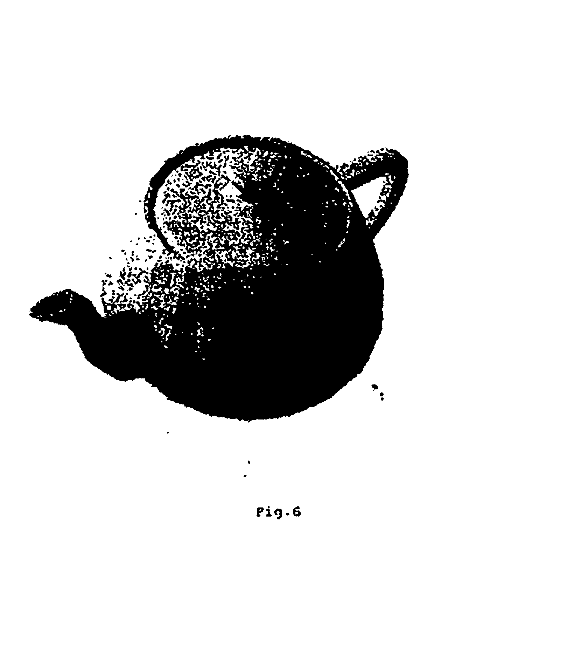

The example of the restored image of three-dimensional controllable object is given on Fig.6.

### Best Mode for Carrying Out the Invention

Method of the contactless control of the linear sizes of the three-dimensional objects is carried out as follows.

The optical radiation beam coming from a source 1, is modulated on one coordinate by the space and time light modulator 2. Produced by this way structuring illuminating in the form of aperiodic system of strips is projected on a controllable object surface, which relief distorts by known way an image of the structuring illuminating generated with the help of the modulator 2. The objective 3 projects a picture arising on a controllable surface on a sensitive platform of the photoregistrar 4. The electronic unit 5 transforms a signal from the photoregistrar output 4 and records the next image of structuring illuminating in an internal memory.

The operator can observe a registered picture on the screen of the unit 6 and control a character of modulation of an optical radiation beam changing an operating mode of the unit 5. As the version of realization, variation of modulation character can be carried out automatically up to attainment of a possibility of registration of all zones of the structured illuminating, except for which were projected in apertures.

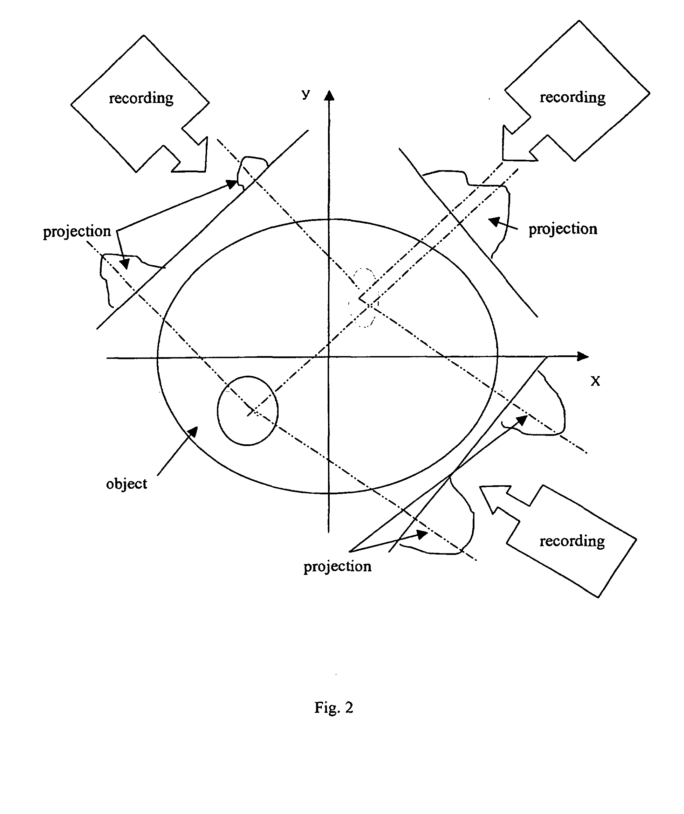

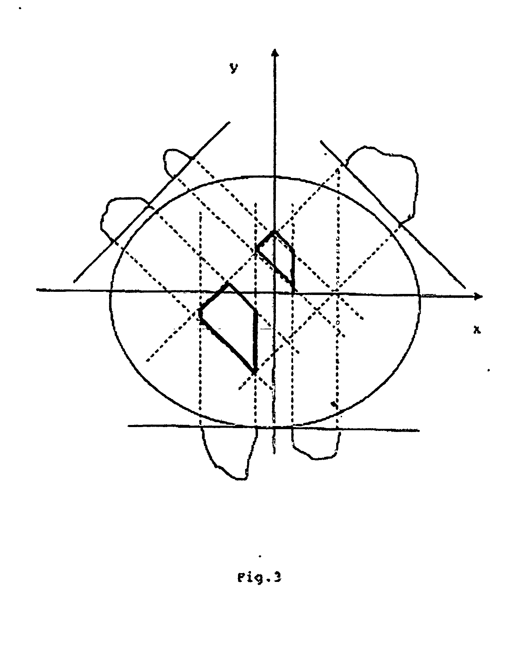

The described procedure is repeated several times at various foreshortenings of illuminating and registration, as shown, for example, on Fig.2. Processing of registration results is carried out in two stages. At the first stage, the macrostructure, topology of a surface are restored by restoration of the tomogram using reverse projecting of images of the illuminated parts of a surface and summation of reverse projections with regard to with regard to turn of each projection to the angle appropriate to each illumination foreshortening, as shown on Fig.3. At the subsequent processing, record of a probing illuminating structure distorted by a relief of the controllable object surface, in which each pair of coordinates and value of a relief height appropriate to this pair of coordinates are coded by distortions of probing illuminating structure, is read from an internal memory of the digital electronic unit 5. In this case areas in which there is no image of the distorted structure of probing illuminating are unequivocally identified as the areas appropriate to through apertures. Variation of zones position is proportional to a relief height, and a position of occurred variations conforms to two other coordinates.

This invention can be used successfully in technological forming processes of complex-shaped objects (vanes of turbines and the like). In addition, it can be used in various applications of computer three-dimensional diagrams.

### LITERATURE.

M.Franson. Optics of speckles. - M.:Mir, 1980, p.141-143. Technical vision of robots.- by ed. A.Pew.; trans. from eng. - M.:Mashinostroenie, 1987. p.56-57
G.G.Levin, G.N.Vishnjakov Optical tomography. - M.: Radio and communication, 1989.-224p.: ill., p.10-12

## Claims

1. The method of the contactless control of the linear sizes of the three-dimensional objects consisting of repeated illumination of a controllable object surface by a beam of optical radiation under different foreshortenings, registration of flat images of the illuminated parts of a surface at each illumination foreshortening variation, topology restoration of a controllable object surface using reverse images projecting of the illuminated parts of a surface and summation of reverse projections with regard to turn of each projection to the angle appropriate to each illumination foreshortening,
**characterized in that** illumination of a controllable object surface is carried out by probing structured illuminating, operating a spatial modulation of an optical radiation beam, registration of flat images of the illuminated parts of a surface is carried out on a direction distinct from normal, also the controllable sizes are judged with regard to restored topology together with determination of a relief height of a controllable object surface by a degree of image distortion of the probing illuminating structure, two other coordinates - by a distortions position of illuminating structure on restored topology of a controllable object surface.
